# EUROPEAN PATENT APPLICATION

(11) **EP 1 779 962 A1**
(43) Date of publication of application: **02.05.2007**
(21) Application number: 05739134.4
(22) Date of filing: 10.05.2005
(51) Int. Cl.: B23K 26/20, H01M 2/02, H01M 2/10, H01M 2/20

(54) **METHOD FOR WELDING THIN PLATES OF DIFFERENT METAL, JOINED BODY OF THIN PLATES OF DIFFERENT METAL, ELECTRIC DEVICE, AND ELECTRIC DEVICE ASSEMBLY**

(30) Priority: 09.08.2004 JP 2004232178
(71) Applicant: NEC Corporation, Tokyo 108-01 (JP)
(72) Inventor: Hosoya, Toshizo, c/o NEC Lamilion Energy, Ltd., Sagamihara-shi, Kanagawa 229-1198 (JP)
(74) Representative: Wenzel & Kalkoff
(86) International application number: PCT/JP2005/008485
(87) International publication number: WO 2006/016441

(57) **Abstract**

A bimetallic thin plate jointing element that is jointed, such that good electric characteristics are maintained, is provided. Thin plate jointing element (10) is formed by welding and jointing positive-electrode terminal (1) and negative-electrode terminal (2) having different melting points, and having flexibility. A plurality of spot-like welding areas (3) formed, for example, by laser welding are provided at overlaid portion (9) of positive-electrode terminal (1) and negative-electrode terminal (2). Welding areas (3) are formed by irradiating laser beams from the side of positive-electrode terminal (1) having a relatively low melting point, and have a cross-sectional shape that is tapered from the side of positive-electrode terminal (1) side toward negative-electrode terminal (2).

## Description

### Technical Field

The present invention relates to a welding method for irradiating laser beams or electron beams and jointing metallic thin plates of different materials using heat generated at that time, a bimetallic thin plate jointing element jointed by this method, an electric device which uses the bimetallic thin plate jointing element as a terminal, and an electric device assembly.

### Background Art

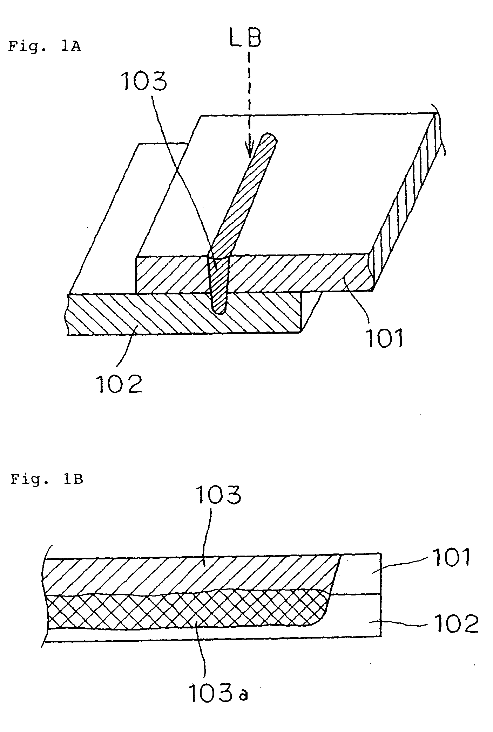

Conventionally, laser welding for jointing metallic plates by irradiating laser beams is known. Figure 1 explains laser welding, Figure 1A is a perspective view, and Figure 1 B is a cross section view showing a welding area along a longitudinal direction. Additionally, such laser welding is disclosed in Japanese Patent Laid-Open No. 300086/97.

As shown in Figure 1A, laser welding is done by partially overlaying two metallic plates 101 and 102 to each other, and irradiating laser beams to that overlaid portion from above. That is to say, upper metallic plate 101 is heated by the irradiated laser beams and locally molten, and lower metallic plate 102 is locally molten. These molten metals are mixed together, and cooled and hardened, so as to form welding area 103. Also, by relatively moving welded materials (metallic plates 101 and 102) while irradiating the laser beams, welding area 103 is formed in such a way that it continues in a predetermined direction, as shown.

Welding area 103 has a cross sectional shape with a relatively high aspect ratio. Also, when two metallic plates 101 and 102 are made of materials different from each other, welding area 103, as shown in Figure 1 B, includes alloy part 103a alloyed by mixing two kinds of molten metals. In this manner, laser welding heats and welds a welded material by the heating action of irradiated laser beams. Additionally, an electron beam welding method utilizing the heating action of electron beams is known as such a method for heating and melting a welded material by irradiating energy beams.

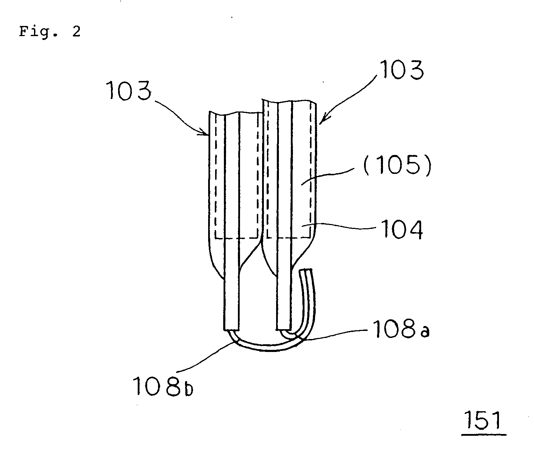

An example for applying the above-mentioned laser welding technique to an assembled battery is disclosed, for example, in Japanese Patent Laid-Open No. 2003-338275, and will be explained with reference to Figure 2 as follows.

Assembled battery 151 is used, for example, as a power source for driving a motor of an electric vehicle and a hybrid electric vehicle (hereinafter, simply referred to as "electric vehicles"). Assembled battery 151 is configured to obtain a predetermined voltage by laminating a plurality of laminated battery cells 103. One laminated battery cell 103 has generating unit 105 which is hermetically sealed by outer capsule 104, and positive-electrode terminal 108a (for example, aluminum) and negative-electrode terminal 108b (for example, copper or nickel) which are electrically connected with inside generating unit 105 and which are extended from the peripheral edge of heat-sealed outer capsule 104. In the illustrated embodiment, positive-electrode terminal 108a and negative-electrode terminal 108b of respective laminated battery cell 103 are electrically connected to each other, for example, by laser welding, so that laminated battery cells 103 are serially connected to each other.

### Disclosure of the Invention

However, when different metals are welded using the above-mentioned laser welding or electron beam welding, an alloy part illustrated in Figure 1 B is produced at the welding area. In particular, when thin metallic plates such as terminals of a battery are welded, most of the welding area is change to alloy. Normally, electric resistance is increased at an alloyed portion, which leads to the possibility of deteriorating an electric characteristic at a connecting part.

Therefore, an object of the present invention is to provide a method for welding different metallic thin plates capable of jointing different metallic thin plates used for terminals of a battery while maintaining a sufficient electric characteristic. Also, another object of the present invention is to provide a bimetallic thin plate jointing element jointed while maintaining a sufficient electric characteristic, and an electric device which uses the bimetallic thin plate jointing element as a terminal, and an electric device assembly.

To achieve the above-mentioned objects, in a method for welding different metallic thin plates according to the present invention, first and second metallic thin plates having different melting points and being flexible are partially overlaid to each other, and energy beams are irradiated to the overlaid portion to form a welding area, so that the metallic thin plates are jointed to each other. This method has steps for irradiating energy beams from the first metallic thin plate side that has a relatively low melting point, and for forming a plurality of spot-like welding areas as the above-mentioned welding area.

Also, the step for forming a plurality of the spot-like welding areas may include a step for aligning a plurality of the spot-like welding areas in one direction and in line, and laser beams or electron beams may be used as the energy beams.

In the bimetallic thin plate jointing element according to the present invention which can be manufactured by the above-mentioned welding method according to the present invention, first and second metallic thin plates having different melting points and being flexible are partially overlaid to each other, and a plurality of spot-like welding areas are formed at the overlaid portion. The spot-like welding areas have a cross sectional shape that is tapered from the first metallic thin plate side which has a relatively low melting point to the second metallic thin plate.

Also, the first metallic thin plate (low melting point member) may be made of an aluminum-base material, and the second metallic thin plate (high melting point member) may be made of a copper-base material.

In the bimetallic thin plate jointing element according to the present invention, the metallic thin plates are jointed to each other by a plurality of the spot-like welding areas. Therefore, compared to a conventional constitution in which the metallic thin plates are jointed by a continuous welding area, the total mass of the welding areas themselves, i.e., a total mass of the alloyed materials, is reduced, so that any increase of electric resistance by the alloyed materials can be restrained. Also, an area between the welding areas in a closely-jointed surface of the metallic thin plates has a condition in which the metallic thin plates are directly and stably jointed closely to each other, so that any increase of electric resistance can be restrained. Furthermore, because the spot-like welding areas have a tapered cross-sectional shape, the diameter of the welding area on the closely-jointed surface of the metallic thin plates is comparatively small, so that the area between the welding areas can be kept large.

In the welding method according to the present invention, the above-mentioned bimetallic thin plate jointing element according to the present invention can be reliably manufactured. Also, compared to a conventional structure for forming a continuous welding area, this welding method for forming a plurality of spot-like welding areas can reduce energy required for forming the welding areas. In particular, laser beams are irradiated from a low melting-point member side, so that the welding areas can be formed with less energy than that when irradiated from a high melting-point member side.

Also, in the electric device according to the present invention, first and second terminals made of metallic thin plates having different melting points and having flexibility are extended from an electric device element. A terminal piece made of a metallic thin plate of a material substantially identical to that of the second terminal is partially overlaid on the first terminal and a plurality of spot-like welding areas are formed at the overlaid portion, and the spot-like welding areas have a cross sectional shape which is tapered from one member with relative low melting point of the first terminal or the terminal piece to the other member side.

Also, in the electric device assembly according to the present invention, two or more above-mentioned electric devices are assembled and electrically connected to each other. The electric devices are electrically connected to each other by jointing the terminal piece of one of the electric devices with the second terminal of the other electric device. Furthermore, in another electric device assembly according to the present invention, two or more above-mentioned electric devices whose first and second terminals made of metallic thin plates having different melting points and having flexibility are extended from an electric device element and are assembled and electrically connected to each other. The first terminal of the electric device and the second terminal of another electric device are partially overlaid to each other, and a plurality of spot-like welding areas are formed at the overlaid portion. The spot-like welding areas have a cross sectional shape which is tapered from the first terminal side that has a relative low melting point to the second terminal side.

As described above, in the method for welding different metallic thin plates according to the present invention, a plurality of spot-like welding areas have a cross sectional shape which is tapered from one thin plate toward the other thin plate, so that the total mass of the welding areas made of the alloyed material is reduced, and an area where metallic thin plates come into direct and close contact to each other is secured between the welding areas, as a result of which the metallic thin plates can be jointed to each other while keeping a sufficient electric characteristic. Accordingly, the bimetallic thin plate jointing element according to the present invention which can be manufactured by such a welding method has a sufficiently maintained electric characteristic. If such a jointing element is used as a terminal of the electric device, an electric device assembly with a sufficiently kept electric characteristic at a connection part of the terminals can be provided.

### Brief Description of the Drawings

Figure 1A is a perspective view for explaining a laser welding;
Figure 1 B is a cross-section view of a welding area of Figure 1A along its longitudinal direction;
Figure 2 shows one example of a conventionally assembled battery;
Figure 3 is a perspective view showing one embodiment of an assembled battery according to the present invention;
Figure 4A is an enlarged view showing the constitution of the thin plate jointing element of Figure 3 and is a partially-cut perspective view of a thin plate jointing element;
Figure 4B is a cross-section view of the thin plate jointing element of Figure 4A cut along an illustrated Y-direction;
Figure 5A shows a shape of a welding area at a closely-jointed surface of a terminal, and shows the constitution in this embodiment;
Figure 5B shows a shape of a welding area at a closely-jointed surface of a terminal, and shows a conventional constitution in a comparison example;
Figure 6 shows a condition in which space is generated between terminals;
Figure 7 is a cross-section view for explaining an indentation formed on the surface of the welding area;
Figure 8 shows a modified example of the arrangement of the welding areas; and
Figure 9 is a perspective view showing one embodiment of a laminated battery cell according to the present invention.

### Description of Symbols

- 1: positive-electrode terminal
- 1 a: positive-electrode terminal piece
- 2: negative-electrode terminal
- 3: welding areas
- 3a: molten parts
- 3b: indentation
- 4: outer capsule
- 7: area between welding areas
- 9: overlaid portion
- 10, 10a: thin plate jointing elements
- 20, 21: laminated battery cells
- 50, 51: assembled batteries

### Best Mode for Carrying Out the Invention

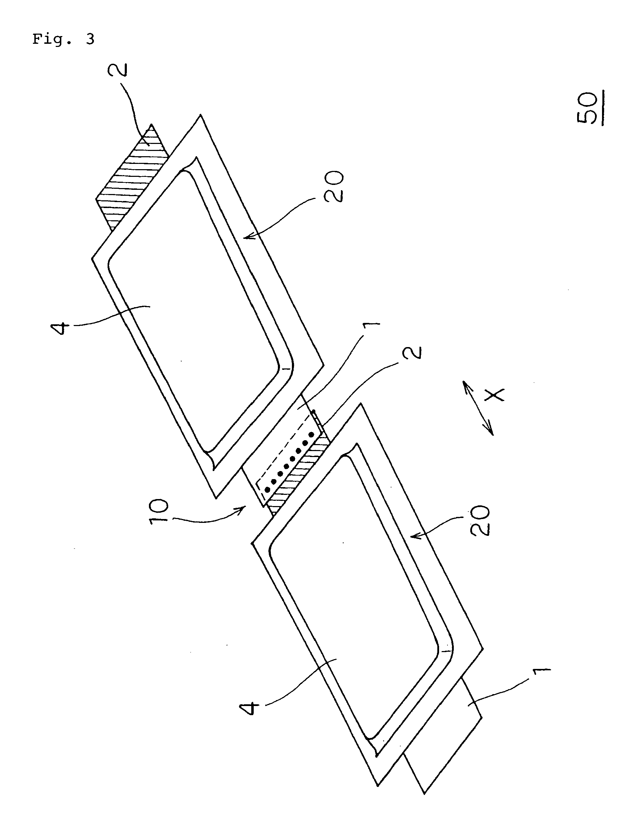

Now, an embodiment of the present invention will be explained with reference to the drawings. Figure 3 is a perspective view showing one embodiment of an assembled battery according to the present invention.

As shown in Figure 3, assembled battery 50 is an electric device assembly which is configured by serially connecting a plurality of laminated battery cells 20 (electric devices). In Figure 3, laminated battery cells 20 are shown as aligned in a line, but may be overlaid on each other when needed.

One laminated battery cell 20 has a generating unit (electric device element) not shown, which is hermetically sealed by outer capsule 4, and positive-electrode terminal 1 and negative-electrode terminal 2 that are electrically connected with the inside generating unit are extended from the periphery of the outer capsule 4. Also, in illustrated thin plate jointing element 10, positive-electrode terminal 1 and negative-electrode terminal 2 are jointed to each other by welding, and electrically connected to each other. In this embodiment, laminated battery cells 20 are electrically connected to each other by thin plate jointing element 10. Also, both positive-electrode terminal 1 and negative-electrode terminal 2 are extended from both sides of laminated battery cell 20 to extend in an X-direction as shown.

Positive-electrode terminal 1 are made of aluminum, and negative-electrode terminal 2 are made of copper. Both terminals 1 and 2 have a thickness of, for example, about several hundred µm. Terminals 1 and 2 have a certain degree of flexibility so that they can be bent to surely and electrically connect with laminated battery cells 20 without folding or cracking the terminals, for example, when laminated battery cells 20 are overlaid to each other for accommodation.

Also, the material used for positive-electrode terminal 1 is not especially limited as long as it is aluminum, an aluminum alloy, or an aluminum-base material obtained by applying alumite treatment or resin coating to them. The material used for negative terminal 1 is not especially limited as long as it is copper, a copper alloy, or a copper-base material obtained by plating them with metal (for example, nickel).

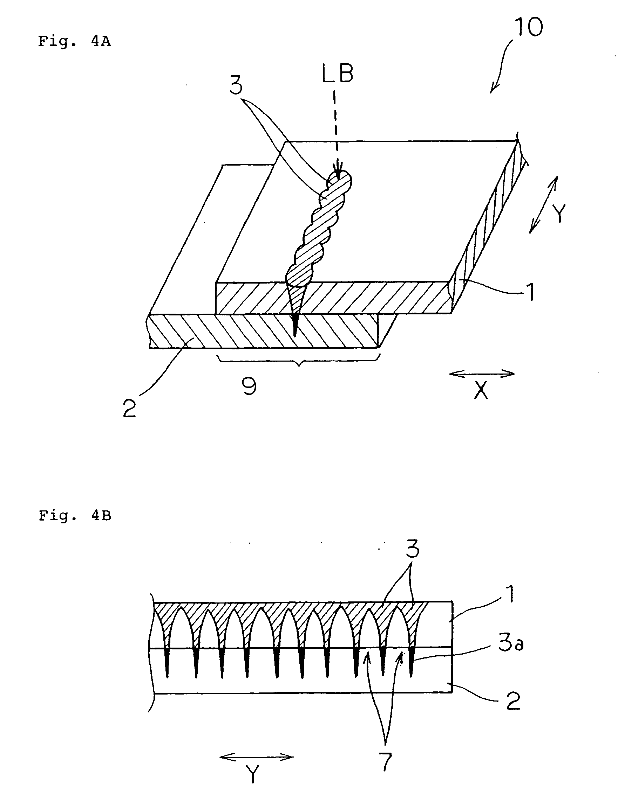

Now, thin plate jointing element 10 will be explained in more detail with reference to Figure 4. Figure 4 is an enlarged view showing the constitution of the thin plate jointing element of Figure 3, Figure 4A is a partially-cut perspective view of a thin plate jointing element, and Figure 4B is a cross section view of the thin plate jointing element cut along an illustrated Y-direction.

Positive-electrode terminal 1 and negative-electrode terminal 2 are overlaid to come into close contact to each other at overlaid portion 9, and positive-electrode terminal 1 is located on an upper side. In this manner, because of the condition in which such close contact is achieved, current flows via this closely jointed surface. Also, a plurality of spot-like welding areas 3 formed by laser welding are aligned in the illustrated Y-direction at predeterminedly arranged pitches at overlaid portion 9. In this embodiment, though a plurality of welding areas 9 are formed in one line, they may be formed in two or more lines when needed.

One welding area 3 has a wedge-like shape that it is tapered from upper positive-electrode terminal 1 toward lower negative-electrode terminal 2. In Figure 4, the top sides of welding areas 3 are shown as molten parts 3a, and at least molten parts 3a and their neighborhood areas of welding areas 3 are alloyed. In this embodiment, the tops of welding areas 3 do not reach the bottom surface of negative terminal 2. However, the present invention is not limited to that, and the tops may reach the bottom surface of negative-electrode terminal 2. Also, the number and the arranged pitch of welding areas 3 can be variously changed according to the predetermined jointing strength required for thin plate jointing element 10.

As shown in Figure 4B, welding areas 3 are spaced away from each other, so that positive-electrode terminal 1 and negative-electrode terminal 2 are brought into direct contact with each other on a closely-jointed surface of the terminals, i.e., in area 7 positioned between welding areas 3.

In thin plate jointing element 10 according to the present invention configured as described above, spot-like welding areas 3 are spot welded to joint the terminals, so that the following advantages can be obtained.

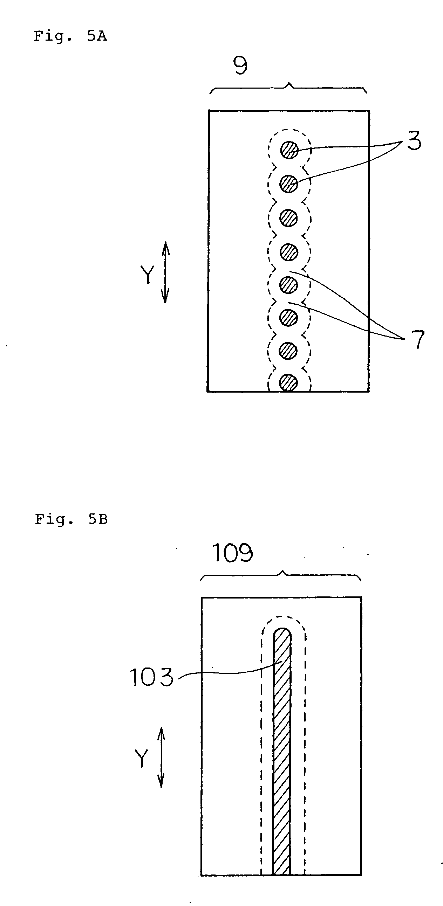

First, the constitution in this embodiment will be compared with a conventional constitution as shown in Figure 1 with reference to Figure 5. Here, Figure 5 shows a shape of a welding area at a closely-jointed surface of the terminals, Figure 5A shows the constitution in this embodiment, and Figure 5B shows a conventional constitution in a comparison example.

In the constitution of this embodiment, the total area (total mass) of welding areas 3 themselves are smaller at overlaid portion 9 than the total area of welding areas 103 in the constitution shown in Figure 5B, so that an increase of the electric resistance by alloyed welding areas 3 can be restrained and the electric characteristic of overlaid portion 9 improves. Also, area 7 between the welding areas, with which positive-electrode terminal 1 and negative-electrode terminal 2 come into direct contact, is formed between welding areas 3, and current can be conducted in this area, where the electric resistance is not increased, so that good electric characteristics are mainteined compared to the constitution shown in Figure 5B. Because the terminals are jointed to each other by welding areas 3 on both the upper and lower sides of area 7 between the welding areas, positive-electrode terminal 1 and negative-electrode terminal 2 come into sufficiently close contact to each other, so that a space is rarely generated between the terminals and sufficient current can be conducted.

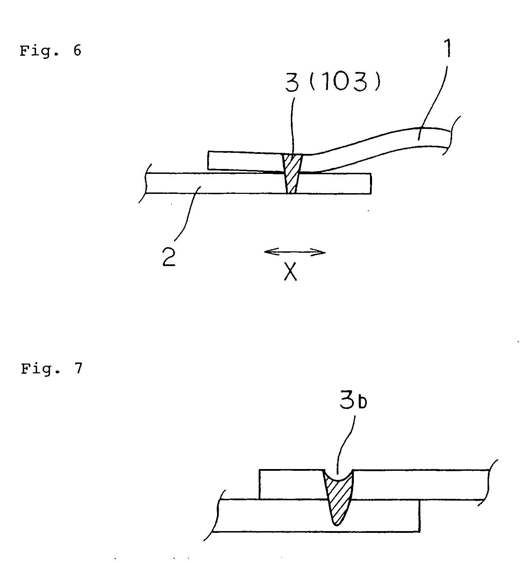

Furthermore, as shown in Figure 6, if unexpected external force is applied or terminals 1 and 2 themselves are warped to generate space between positive-electrode terminal 1 and negative-electrode terminal 2, area 7 between welding areas 3 is in a condition of stable and close contact in the constitution shown in this embodiment, so that it is more difficult for the electrical characteristics to deteriorate than the constitution shown in Figure 5B. Therefore, it is effective to joint the terminals by a plurality of spot-like welding areas 3 as shown in this embodiment, especially when terminals 1 and 2 have flexibility. Accordingly, the present invention is suitable for jointing terminals, for example, having a thickness of 200 µm and flexibility.

Also, an area where tightness of the terminals is kept in a condition as shown in Figure 6 is diagrammatically shown as an area surrounded by a dotted line in Figure 5. Also, the above-mentioned problem is likely to occur when terminals 1 and 2 are configured to extend in the illustrated X-direction (see Figure 3). To effectively prevent the above-mentioned problem, it is preferable that the arranging direction of welding areas 3 is a direction approximately perpendicular to the X-direction (illustrated Y-direction). If a plurality of welding areas 3 are aligned in the illustrated X-direction, there is a possibility that, in a condition shown in Figure 6, a load will be concentrated on one welding area 3 positioned on the end side, and that welding area 3 might be broken. Accordingly, it is preferable to align a plurality of welding areas 3 in the illustrated Y-direction in terms of effective improvement of mechanical strength in jointing.

Furthermore, in the constitution in this embodiment in which spot-like welding areas 3 are spotted, a mechanical strength in jointing can be efficiently improved compared to the constitution shown in Figure 5B (or the constitution shown in Figure 1) for the following reasons. Normally, as shown in Figure 7, indentation 3b is easily produced on the surface side of the welding areas formed by laser welding or electron beam welding. Accordingly, linear welding areas 103 as shown in Figure 1 naturally have a continuous indentation. Such a continuous indentation causes stress concentration on that indentation, which might lead to deterioration of the mechanical strength. Meanwhile, in the constitution of this embodiment, spot-like welding areas 3 are spot welded, and indentations are not continuous one to the other, which rarely leads to deterioration of the mechanical strength due to the stress concentration. This means that the mechanical strength can be efficiently improved even with a small number of welding areas 3.

Next, the above-mentioned method for producing thin plate jointing element 10 in this embodiment will be explained, again, with reference to Figure 4.

First, as shown in Figure 4, positive-electrode terminal 1 and negative-electrode terminal 2 are overlaid upon each other in a manner that positive-electrode terminal 1 is on the upper side. Here, as described above, positive-electrode terminal 1 is made of aluminum (having a melting point of about 660 °C), and negative-electrode terminal 2 is made of copper (having a melting point of about 1080 °C). In this manner, it is preferable that positive-electrode terminal 1 having a relatively low melting point is arranged on an upper side to more easily form welding areas 3 having the above-mentioned cross-sectional shape.

Then, laser beams are irradiated to overlaid portion 9 from above positive-electrode terminal 1. Also, an irradiation volume (irradiation time and irradiation strength) of the laser beams is appropriately adjusted to an extent that the tops of welding areas 3 that are to be formed do not reach the bottom surface of negative-electrode terminal 2. By laser beam irradiation, upper positive-electrode terminal 1 is locally molten, and lower negative-electrode terminal 2 is also molten. These molten metals are mixed to each other, cooled and hardened, so as to become one welding area 3. At least a top side (molten part 3a side) of welding area 3 is made of an alloy obtained by blending both of the metals.

Because positive-electrode terminal 1 that has a lower melting point will start melt with a comparatively small amount of heat, it is preferable to irradiate the laser beams from the side of positive-electrode terminal 1 so as to reduce energy required for welding. Also, because negative-electrode terminal 2 that has a higher melting point is arranged on a lower side, welding area 3, in particular, the diameter of a portion biting into negative-electrode terminal 2 (molten part 3a), becomes comparatively small, so that the entire cross-sectional shape of welding area 3 is tapered toward the negative-electrode terminal 2 side. In this manner, it is preferable that the cross-sectional shape of welding area 3 is tapered, so as to widen area 7 between the welding areas on the closely-jointed surface of the terminals.

Then, overlaid positive-electrode terminal 1 and negative-electrode terminal 2 are relatively moved in the illustrated Y-direction by a predetermined pitch, and the laser beams are irradiated again, so as to form next welding area 3. Thereafter, similar steps are repeated to form a plurality of welding areas 3, so that thin plate jointing element 10 in this embodiment is manufactured.

According to the above-mentioned method for manufacturing thin plate jointing element 10, namely a welding method for jointing terminals, welding areas 3 having the above-explained cross-sectional shape are sufficiently formed. Also, a plurality of spot-like welding areas 3 can be formed, so that the amount of energy required for forming welding areas 3 can be made small, compared to a method for continuously irradiating laser beams as explained with reference to Figure 1. In particular, a low melting-point member (positive-electrode terminal 1) is located on the upper side and the laser beams are irradiated from the side of a low melting-point member, so that welding areas 3 can be formed with a small amount of energy than that when the laser beams are irradiated from the side of a high melting-point member. In addition, because the top side of welding areas 3 is tapered, welding areas 3 have an excellent shape.

For example, YAG laser may be used as laser beams in the above-mentioned welding method. Also, other than for laser welding, electron beam welding using electron beams may be used.

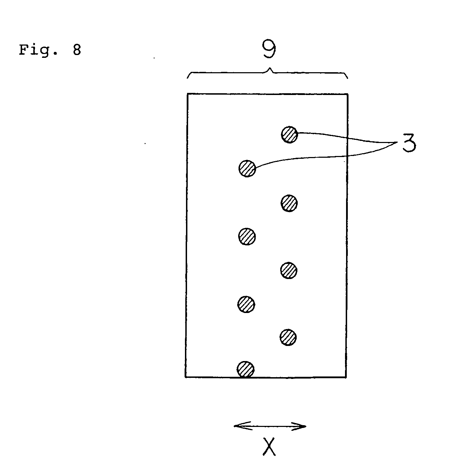

Also, the arrangement of welding areas 3 is not limited to that shown in Figure 4. As shown in Figure 8, two lines of welding areas 3 arranged at predetermined intervals in the illustrated X-direction may be arranged in a staggered manner so that they displace each other by an approximately half pitch in the illustrated Y-direction. In this construction, a closely-jointed surface of adjacent welding areas 3 (area 7 between the welding areas, see Figure 4) is widened, which is advantageous for improving electric characteristics and a mechanical strength.

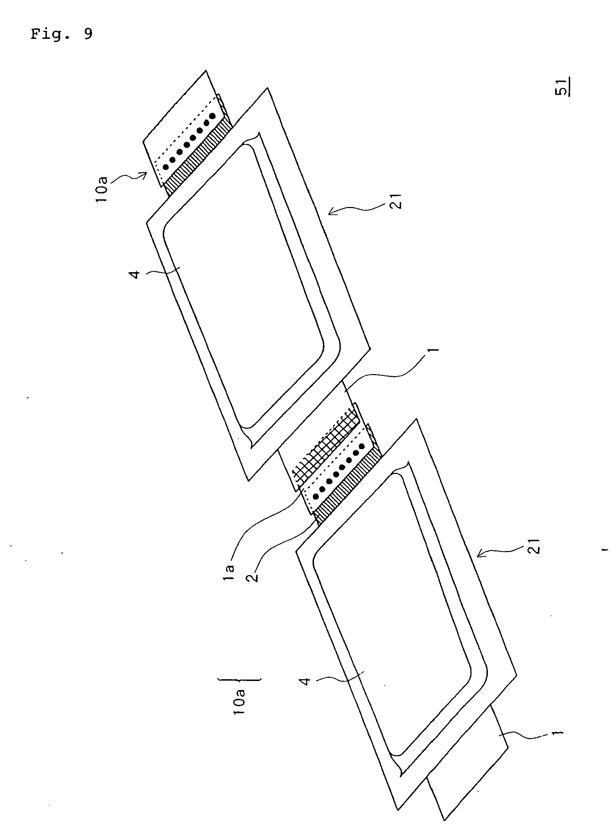

Furthermore, in assembled battery 50 shown in Figure 3, positive-electrode terminal 1 of one laminated battery cell 20 and negative-electrode terminal 2 of the other laminated battery cell 20 are directly jointed to each other, and their jointing element constitutes thin plate jointing element 10. However, the present invention is not limited to that, and may be that shown in Figure 9. Figure 9 is a perspective view showing one embodiment of laminated battery cells according to the present invention, and shows a condition of the assembled battery in which laminated battery cells are jointed to each other.

Each of laminated battery cells 21 (electric devices) is constituted in a manner similar to laminated battery cell 20 in Figure 3, except that laminated battery cell 21 has thin plate jointing element 10a on the side of negative-electrode terminal 2. That is to say, in laminated battery cell 21, positive-electrode terminal piece 1 a made of a material identical to that of positive-electrode terminal 1 is jointed with negative-electrode terminal 2 of laminated battery cell 20 in Figure 3 by the above-described welding method. Additionally, the materials of positive-electrode terminal 1 and positive-electrode terminal piece 1 a do not necessarily need to be strictly identical as long as the materials are selected from substantially identical or the same kind of materials in a range that will not cause the below-described electric corrosion problem.

In the constitution for jointing positive-electrode terminal piece 1 a and negative-electrode terminal 2 made of different materials like thin plate jointing element 10a, different metals are in contact to each other, which might cause a problem in which an electric corrosion phenomenon occurs and terminal members are corroded, for example, when water enters between both of the members by dew condensation. To prevent such a problem, the present applicant has proposed in a prior application (Japanese Patent Application No. 38141/03) that the overlaid portion of positive-electrode terminal piece 1 a and negative-electrode terminal 2 be hermetically sealed, for example, by using a resin material.

In this manner, in the case of airtight sealing, it is preferable that thin plate jointing element 10a be formed in advance as single laminate battery cell 21 before the step of connecting laminated battery cells 21, and that the overlaid portion be hermetically sealed to improve workability. Then, positive-electrode terminal piece 1 a of thin plate jointing element 10a of one laminated battery cell 21 is jointed with positive-electrode terminal 1 of the other laminated battery cell 21, so that laminated battery cells 21 may be electrically connected to each other. In this manner, when terminals made of the same kind of material are jointed to each other, the above-mentioned electric corrosion problem rarely occurs, so that there is no need for an airtight sealing step after laminated battery cells 21 are jointed to each other. That is to say, in laminated battery cell 21 shown in Figure 9, thin plate jointing element 10a is formed in a condition in which laminated battery cell 21 is a single element, so that an airtight sealing step to prevent electric corrosion can be carried out with good workability. Additionally, when forming assembled battery 51, the same kind of terminals (positive-electrode terminal piece 1 a and positive-electrode terminal 1) may be connected to each other, so that workability is good, which is an advantage of the present invention. Also, when positive-electrode terminal piece 1 a and positive-electrode terminal 1 are jointed to each other, various prior art jointing methods such as laser welding can be used.

The present invention has been explained with reference to examples of laminated battery cells and an assembled battery formed by assembling the cells above. However, the present invention can be suitably used for jointing terminals extended from electric device elements other than a battery such as a capacitor. For example, the electric device elements may be an electric double-layer capacitor, an electrolytic condenser, or the like. The present invention can be suitably applied to an electric device having two laminar terminals made of different metals. Accordingly, the electric device is not limited to a laminated battery cell, and may be various kinds of elements, for example, a battery in which a generating unit is accommodated in a can-like member, or a condenser from which laminar terminals are drawn.

Although a detailed constitution has not been explained above, a generating unit accommodated in a laminated battery cell 20 may be of a laminate type that the active electrode on the side of the positive-electrode and the active electrode on the side of the negative-electrode are laminated via a separator, or of a thin winding type in which a belt-like positive-electrode side active electrode and a belt-like negative-electrode side active electrode are laminated via a separator, wound, and then compressed into a flat shape (not shown). Various kinds of a generating unit may include a lithium-ion secondary battery, which may be, for example, configured such that a positive-electrode plate formed by applying a positive-electrode active material such as lithium-manganese compound oxide and cobalt-acid lithium on both surfaces of an aluminum foil and a negative-electrode plate formed by applying a carbon material capable of doping or dedoping lithium on both surfaces of a copper foil are opposite each other via a separator and dipped with an electrolyte that contains lithium salts. Besides, the generating unit may be a nickel-metal-hydride battery, a nickel-cadmium battery, a lithium-metal primary/secondary battery, a lithium polymer battery, and the like.

## Claims

1. A method for welding different metallic thin plates that is partially overlaying first and second metallic thin plates having different melting points and having flexibility, and irradiating energy beams to the overlaid portion to form a welding area, so that said metallic thin plates are jointed to each other, the method having steps for irradiating energy beams from said first metallic thin plate side having a relatively low melting point, and for forming a plurality of spot-like welding areas as said welding area.

2. The method for welding different metallic thin plates according to claim 1, wherein said step for forming a plurality of the spot-like welding areas includes a step for aligning a plurality of said spot-like welding areas in one direction and in line.

3. The method for welding different metallic thin plates according to claim 1 or 2, wherein said energy beams are laser beams or electron beams.

4. A bimetallic thin plate jointing element, wherein first and second metallic thin plates having different melting points and having flexibility are partially overlaid upon each other, and a plurality of spot-like welding areas are formed at the overlaid portion, and wherein said spot-like welding areas have a cross-sectional shape that is tapered from said first metallic thin plate side having a relatively low melting point to said second metallic thin plate.

5. The bimetallic thin plate jointing element according to claim 4, wherein said spot-like welding areas are aligned in one direction and in line.

6. The bimetallic thin plate jointing element according to claim 5, wherein a residual portion of said first metallic thin plate except for said overlaid portion, and a residual portion of said second metallic thin plate except for said overlaid portion extend in a direction approximately perpendicular to said one direction, respectively.

7. The bimetallic thin plate jointing element described in any one of claims 4 to 6, wherein said first metallic thin plate is made of an aluminum-base material, and said second metallic thin plate is made of a copper-base material.

8. An electric device, wherein first and second terminals made of metallic thin plates having different melting points and having flexibility are extended from an electric device element, and wherein a terminal piece made of a metallic thin plate of a material substantially identical to that of said second terminal is partially overlaid on said first terminal and a plurality of spot-like welding areas are formed at the overlaid portion, and wherein said spot-like welding areas have a cross-sectional shape which is tapered from one member of said first terminal or said terminal piece having a relatively low melting point to the side of the other member.

9. The electric device according to claim 8, wherein said device element is a generating unit for a battery which is hermetically sealed by an outer capsule made of a laminated film.

10. An electric device assembly, wherein two or more electric devices according to claim 8 are assembled and electrically connected to each other, and wherein said electric devices are electrically connected to each other by jointing said terminal piece of one of said electric devices with said second terminal of said other electric device.

11. An electric device assembly, wherein two or more electric devices whose first and second terminals made of metallic thin plates having different melting points and having flexibility are extended from an electric device element are assembled and electrically connected to each other, wherein said first terminal of said electric device and said second terminal of said another electric device are partially overlaid upon each other, and a plurality of spot-like welding areas are formed at the overlaid portion, and wherein said spot-like welding areas have a cross sectional shape which is tapered from said first terminal side having a relatively low melting point to the side of said second terminal.
